# EUROPEAN PATENT SPECIFICATION

(11) **EP 4 201 270 B1**
(45) Date of publication and mention of the grant of the patent: **30.10.2024**
(21) Application number: 21217655.6
(22) Date of filing: 23.12.2021
(51) Int. Cl.: A47J 31/42, A47J 42/50

(54) **FULLY AUTOMATIC COFFEE MACHINE WITH REMOVABLE COFFEE BEAN CONTAINER**
VOLLAUTOMATISCHE KAFFEEMASCHINE MIT ABNEHMBAREM KAFFEEBOHNENBEHÄLTER
MACHINE À CAFÉ ENTIÈREMENT AUTOMATIQUE DOTÉE D'UN RÉCIPIENT AMOVIBLE POUR LES GRAINS DE CAFÉ

(43) Date of publication of application: 28.06.2023
(73) Proprietor: BSH Hausgeräte GmbH, 81739 München (DE)
(72) Inventor: Golicnik, Matjaz, 3332 Recica (SI); Kirschner, Andreas, 83301 Traunreut (DE); Lemez, Samo, 3327 Smartno ob Paki (SI); Ogrizek, Bostjan, 3320 Velenje (SI); Semprimoznik, Ales, 3330 Mozirje (SI)

(56) References cited:
- EP-A1- 2 878 240
- WO-A1-2004/098361
- DE-A1- 102016 213 642
- US-A1- 2016 051 082

## Description

The present invention relates to a coffee machine having removable coffee bean container, including a built-in full automatic coffee machine with the coffee bean container which is being removed from the machine to refill the coffee beans. The present invention also relates to a such coffee beans container.

Automatic coffee machines, including built-in coffee machine are well known in the art. One of the advantages of the a built-in device is that can be accommodated in a space-saving manner in the cabinet and thus takes no work space. Fully automatic coffee machines provide to the consumer a wide types of coffee beverages, such as for example cappuccino, espresso, coffee latte and similar beverages composed primarily of coffee and milk. To accomplish this, fully automatic coffee makers of this type are supplied with coffee in the form of coffee beans in a bean container which needs to be refilled up from time to time. For this reason it is usually removed for a while from the coffee machine for refilling, therefore it is preferable when it contains a device which protect from falling coffee beans from the container in this situation. When the coffee bean container is filled up with coffee bean then the user placed it back to the coffee machine, at this time the protecting device protects from discharging coffee bean till the coffee bean container is inserted into the coffee machine. After placing the coffee bean container into the coffee machine, the protecting device stop working, so the beans can fall freely from the coffee bean container into a grinder whereas are ground and then ground coffee is transferred to a brewing unit. Once the brewing operation for the hot beverage has ended, the ground coffee residue, also called grounds, coming from the brewing unit are discharged into a collection container that is typically provided. The ground coffee residue then remains therein until the next manual emptying by the user.

The document EP2878240A1 discloses a fully automatic coffee machine for household purposes, having a housing and a storage container removable therefrom for coffee beans, which can be moved on an actuating path, having a grinder for coffee beans, having a discharge opening of the storage container for the supply of the beans to the grinder and having a closure device for closing the discharge opening with a door, which when the storage container is moved can be adjusted between an open position to release the discharge opening and a closed position to close the discharge opening, wherein the door can be moved by manual movement of the storage container without pre-tensioning between the open position and the closed position, having a stop on the housing of the fully automatic coffee machine, which stands transversely to the actuating path and, when a storage container is inserted, is in touching contact with the door and can be moved from a locking position out of the actuating path into a release position, having a pivotable latching lug as a stop which, when a storage container is inserted, engages in a locking manner in the direction of the actuating path of the door on an edge of the door or a pivotable rib surface as a stop, the ribs of which run transversely to the actuating path and into which, when a storage container is inserted, a rib on the door engages.

The document US2016051082A1 discloses a beverage-producing machine comprising a housing, a beverage producing unit arranged in the housing and a container for at least one beverage ingredient, for example coffee beans. The container is lockable to the housing and unlockable therefrom. The container comprises a bottom aperture for dispensing the ingredient contained therein and a shutter for selectively closing and opening the aperture. Furthermore, an actuating member is provided in the housing. The actuating member acts upon the shutter for selectively opening and closing the bottom aperture of the container while respectively locking the container to the housing and unlocking the container from the housing.

The document WO2008101773A1 discloses a bean container for a drinks machine, comprising a receptacle for storing beans, a dispensing opening for supplying beans to a grinding mill, and a coupling element arranged in such a way that it can move in relation to the dispensing opening, said coupling element being used to connect the receptacle to the drinks machine. The receptacle and the coupling element each comprise a closing element in the region of the dispensing opening, said closing elements being mobile in relation to each other in order to open and close the dispensing opening.

The document WO2004098361A1 discloses a grinding machine for use in grinding materials, the grinding machine comprising: a grinder assembly for receiving material therein; at least one removable hopper attachable proximate to the grinding assembly for dispensing material to the grinder assembly; a passage defined in the hopper being cooperatively placed in communication with the grinding assembly for dispensing material from the hopper to the grinder assembly; a displaceable shutter being position able in an open position when the hopper is placed on the grinder assembly and being position able in a closed position when the hopper is removed from the grinder assembly; and a slide gate mechanism including a slide gate and a mover linked to the slide gate for controllably opening and closing passage of material from the hopper to the grinder assembly for grinding material therein.

In known solutions usually the guidance is based on the entire coffee bean container housing and coffee bean container assembly shape. Opening and closing of the bean tank aperture cover is based on spring function and snap or lugs functions. Those solutions can cause many mishandles that can come from large dimensions of parts fitting, spring elements failure and snaps or lugs deformations during production, assembling or operation.

The objective of the present invention is to provide a further development with an advantage over the state of the art, and to provide a coffee machine with removable coffee bean container, and more particular a built-in coffee machine with removable coffee bean container, in which the opening and closing of the bean container discharge opening door mechanism is reliable and easy to realize.

In accordance with the present invention, there is provided a coffee machine, having a housing with a housing bottom anda housing opening and a coffee bean container that is removable therefrom through the housing opening, along a movement path. The coffee machine has a grinder for coffee beans. The coffee bean container has a discharge opening for supplying the beans to the grinder, and furtherly comprises a door for closing the discharge opening which can be moved by manual movement of the coffee bean container along the movement path between an opened position and a closed position. The housing has a stop, which stands substantially transversely to the movement path and, when the coffee bean container is being inserted in to the housing through the housing opening along the movement path, the stop is in a touching contact with the door. The coffee machine is provided with a locking member comprising: a locking portion which when the coffee bean container is inserted in to the housing engages the door in a locking manner in the opened position of the door, and an actuating portion, which comes in a touching contact with the coffee bean container which when the coffee bean container is inserted in to the housing, keeps the locking portion engaged with the door in the opened position of it. The said locking member is pivotally connected to the housing bottom and can be rotated about an axis of rotation, and the axis of rotation is arranged between the locking portion and the actuating portion, wherein the axis of rotation is perpendicular to the housing bottom, therefore substantially horizontal rotation of the locking member is provided.

Advantageously, during inserting the container into the housing the door is stopped by the stop, and further movement of the coffee bean container toward inside the housing causes that the discharge opening is gradually uncovered and in end position i.e. when the container is inserted, the locking portion of the locking member engages the door in a locking manner and the same time the actuating portion of the locking member is touched by the portion of the coffee bean container to block the locking member in that position. The discharge opening aligns with the grinder opening, so the coffee beans can easily reach the coffee grinder. When removing the coffee bean container from the housing at the beginning when the coffee bean container is moved along the movement path outside, the locking portion of the locking member engages the door, so the discharge opening is gradually covered, and at the moment when door comes to the closed position, the actuating portion of the locking member loses the touching contact with the coffee bean container, therefore the locking member can be rotated, pushed by the door which are moved together with the coffee bean container. The locking member has an elongated shape, wherein the locking portion and the actuating portion has been placed on the opposite side of the axis of rotation. The positive effect of such solution is easy implementation in the structure of the housing. It provides reliable solution for automatically closing and opening the door that is easy to implement.

In the another preferred embodiment of the invention the locking member is connected with the housing by a bayonet connection, and wherein the bayonet connection comprises a bayonet slot on the housing and a bayonet pin on the locking member. Therefore the assembly process is easy and time effective.

Advantageously housing opening side a front part of the locking member is the locking portion, and a rear portion of the locking member is the actuating portion, when the coffee bean container has been inserted. So, firstly the locking portion can have a touching contact with the locking member and then the actuating portion rotates the locking member.

Advantageously the coffee bean container comprises guiding ribs arranged on an outer bottom portion of the container along the movement path, on the both side of the discharge opening and an actuating rib having an actuating edge in order to ensure touching contact the coffee bean container with the locking member.

In the preferred embodiment of the invention the locking portion comprises a point, a first inclined surface to give a certain rotation of the locking member, a supporting portion and a locking surface, wherein the actuating portion comprises a second inclined surface to give opposite direction of rotation of the locking member, when they are in touching contact with a coffee bean container.

Advantageously the first inclined surface turns the locking member clockwise and the second inclined surface turns it in the opposite direction.

Advantageously the actuating portion is rotated by touching contact with a actuating rib against the second inclined surface.

In the preferred embodiment of the invention the door is provided with a locating pin extending from said door along the movement path, said locating pin being sized to be positioned within an opening that is arranged in the stop.

In the preferred embodiment of the invention the coffee bean container is provided with a pivotable latching lug as a door movement limiter, which stops the door in one of the end position, the opened or the closed position of the door.

In the preferred embodiment of the invention the coffee bean container is provided with a locker means for locking the door in closed position, comprises a locker opening arranged on the door, and a locker member that protrudes through the locker opening, wherein the locker member is arranged to be pressed by the locking portion to release movement of the door.

Further benefits and advantages of the present invention will become apparent after a careful reading of the detailed description with appropriate reference to the accompanying drawings.

In the drawings:
- Fig. 1: is a perspective view of a built-in coffee machine in accordance with the preferred embodiment of the present invention.
- Fig. 2: is a perspective view of a housing in accordance with the preferred embodiment of the present invention.
- Fig. 3: is a perspective view of a coffee bean container in accordance with the preferred embodiment of the present invention.
- Fig. 4: is a fragmentary bottom view of the coffee bean container as shown in Fig. 3.
- Fig. 5: is an enlarged fragmentary bottom view of the coffee bean container as shown in Fig. 4
- Fig. 6: is a fragmentary cross sectional view of the housing with inserted the coffee bean container both with the preferred embodiments of the present invention.

In cooperation with attached drawings, the technical contents and detailed description of the present invention are described thereinafter according to a preferable embodiment, being not used to limit its executing scope.

In the following description of the preferred embodiments of the present invention, similar identical reference numbers designate identical or comparable components.

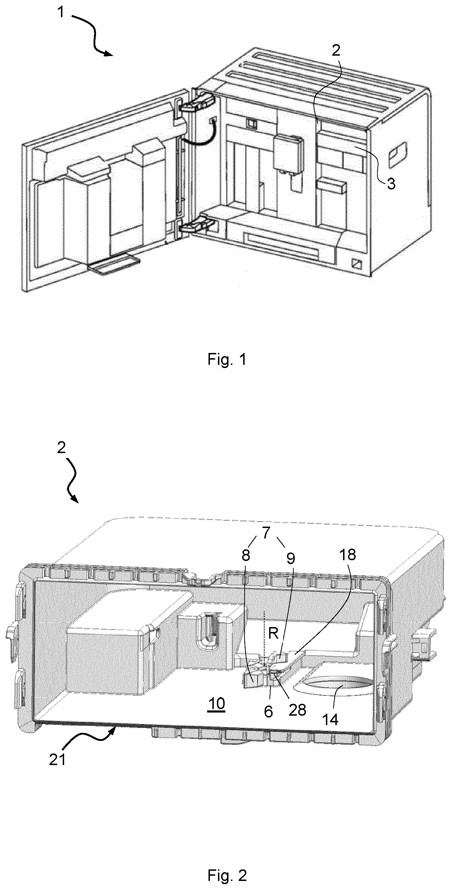

Fig. 1 shows a built-in coffee machine 1 that is provided with a housing 2 for receiving a coffee bean container 3. The coffee bean container 3 is removed from the housing 2 for filing up the coffee, then it is inserted back to the housing 2 along a movement path. The coffee bean container 3 has a discharge opening 4 (not shown on this figure) that during filling up is closed by the door 5 (not shown on this figure) to prevent from falling out coffee beans. However when the coffee bean container 2 is inserted the door 5 is fully opened to feed a coffee grinder (not shown) that is below with the coffee beans. The coffee machine 1 is provided with a mechanism that automatically opening and closing the door 5 appropriately during inserting and removing the coffee bean container 3 in/out the housing 2. It is very convenient for a user to have a such solution that is reliable during the long time of using and which is easy to produce and implement to a device. The main part of the mechanism is the locking member 7 (not shown on this figure) which is pivotally connected to the housing 2 and can be rotated about an axis of rotation (R), comprising: a locking portion 8 which when the coffee bean container 3 is inserted engages the door 5 in a locking manner in the opened position of the door 5, and an actuating portion 9, which comes in the touching contact with the coffee bean container 3 which when the coffee bean container 3 is inserted, keeps the locking portion 8 engaged with the door 5 in the opened position of it. During inserting the coffee bean container 3 into the housing 2 the door 5 is stopped by the stop 6 (not shown on this figure) that is the part of the housing 2, and further movement of the coffee bean container 3 toward inside the housing 2 causes that the discharge opening 4 is gradually uncovered and in end position i.e. when the container 3 is inserted, the locking portion 8 of the locking member 7 engages the door 5 in a locking manner and the same time the actuating portion 9 of the locking member 7 is touched by the portion of the coffee bean container 3 to block the locking member 7 in that position. The discharge opening 4 aligns with a grinder opening 14 (not shown on this figure), so the coffee beans can easily reach the coffee grinder. When removing the coffee bean container 3 from the housing 2 at the beginning when the coffee bean container 3 is moved along the movement path outside, the locking portion 8 of the locking member 7 engages the door 5, so the discharge opening 4 is gradually covered, and at the moment when door 5 comes to the closed position, the actuating portion 9 of the locking member 7 loses the touching contact with the coffee bean container 3, therefore the locking member 7 can be rotated about the axis of rotation R, as it is pushed by the door 5 which is released and therefore can be moved together with the coffee bean container outside.

Fig. 2 shows the housing 2 which is an integral part of the coffee machine 1. The housing 2 has a housing opening 21 for receiving the coffee bean container 3 (not shown on this figure) and the housing bottom 10 provided with a grinder opening 14 which corresponds with the door 5 of the container 3 (not shown on this figure). The housing 2 has a guiding protrusion 18 placed on the housing bottom 10 along the movement path. A front surface of the guiding protrusion 18 is a stop 6 for stopping the door 5. The front surface is also provided with an opening 28 for receiving a locating pin 27 extending from the door 5 along the movement path. The said pin 27 being sized to be positioned within an opening 28. The housing 2 is provided with a locking member 7 which is pivotally connected to the housing 2 and can be rotated about an axis of rotation (R) that is perpendicular to the housing bottom 10, thus enabling to rotate it horizontally. The locking member 7 comprises a locking portion 8 which when the coffee bean container 3 is inserted engages the door 5 in a locking manner in the opened position of the door 5, and an actuating portion 9, which comes in the touching contact with the coffee bean container 3 which when the coffee bean container 3 is inserted, keeps the locking portion 8 engaged with the door 5 in the opened position of it.

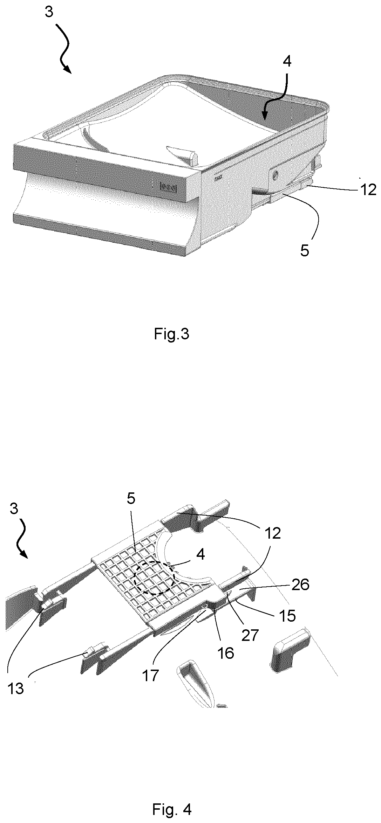

Fig. 3 shows the coffee bean container 3 that is provided on the front face with a handle to easy operate during inserting or removing it in/to the housing 2 (not shown on this figure). Furtherly, the coffee bean container 3 comprises the discharge opening 4 (not shown) arranged in a bottom portion and the door 5 arranged on the outer bottom part of the container 3 to cover the discharge opening 4. The door 5 is in sliding connection with the coffee bean container 3 by means of two guiding ribs 12 (not shown on this figure) arranged on the outer bottom part of the container 3 on the sides of the door 5 along the movement path. Therefore the door 5 can be moved smoothly from the opened to the closed position and back in the movement path direction. Terminal position of the door 5 is fixed by, in the opened position by two latching lugs 13 (not shown on this figure) that protrude transversely from the container 3 to stop the door 5 and that can be rotated by pressing to release the door 5 from guiding ribs 12 exemplary for cleaning it, whereas the terminal position of the door 5, in closed position is assured by protrusion formed on guiding ribs 12.

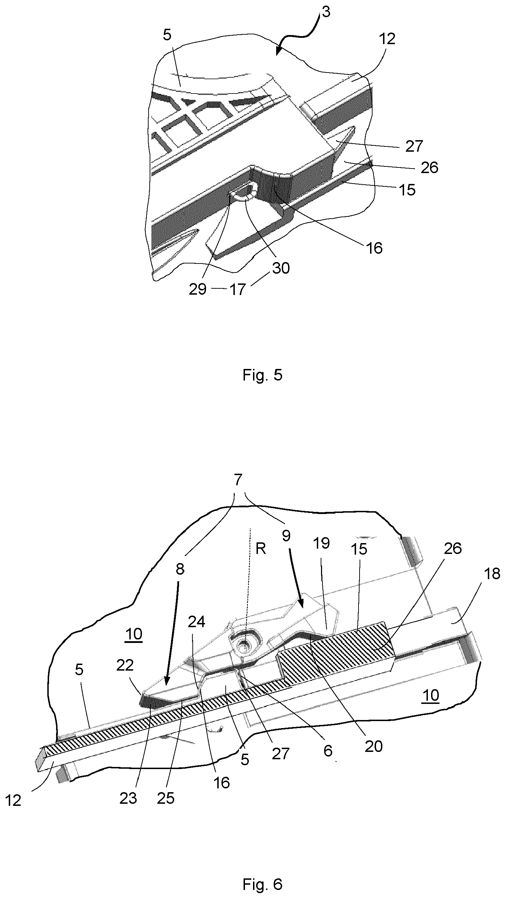

Fig. 4 and Fig. 5 show the outer bottom portion of the coffee bean container 3 which comprises the discharge opening 4 arranged in the bottom portion and the door 5 in order to cover the discharge opening 4. On this figures the door 5 is in the closed position, so it covers the discharge opening 4. The door 5 is in sliding connection with the coffee bean container 3 by means of two guiding ribs 12 arranged on the outer bottom part of the container 3 on the sides of the door 5 along the movement path. Therefore the door 5 can be moved smoothly from an opened to closed position and back in the movement path direction. Terminal position of the door 5 is fixed by, in the opened position by two latching lugs 13 that protrude transversely from the container 3 to stop the door 5 and that can be rotated by pressing to release the door 5 from guiding ribs 12 exemplary for cleaning it, whereas the terminal position of the door 5, in closed position is assured by protrusion formed on guiding ribs 12. The door 5 is provided with a locating pin 27 extending from said door 5 along the movement path. The locating pin 27 being sized to be positioned within an opening 28 that is arranged in the stop 6 (not shown on this figure). Furtherly the coffee bean container 3 comprises a locker means 17 for locking the door 5 in closed position provided to prevent from accidentally opening the door 5 when it is outside the housing 2 (not shown on this figure). The locker means 17 comprises a locker opening 29 arranged in the door 5, and a locker member 30 that protrudes through the locker opening 29. The locker member 30 is arranged to be pressed by the locking portion 8 of the locking member 7 (not shown on this figure) to release movement of the door 5. Furtherly, the door 5 is provided with a locking surface 16 that stands transversely to the movement path and comes to contact a locking surface 24 arranged in the locking portion 8 of the locking member 7. The locking surface 16 of the door 5 and the locking surface 24 arranged in the locking portion 8 of the locking member 7 are complementary to one another and both inclined to provide easy disengagement of the locking member 7 from the door 5.

Fig. 6 shows fragmentary the housing 2 with inserted the coffee bean container 3. The housing 2 is provided with the housing bottom 10 to which the locking member 7 is pivotally connected by the bayonet connection (not shown on this figure). The locking member 7 can be rotated about an axis of rotation R that is placed nearby the stop 6. The axis of rotation R is arranged between the locking portion 8 and the actuating portion 9, wherein the axis of rotation R is perpendicular to the housing bottom 10, therefore substantially horizontal rotation of the locking member 7 is provided. The locking member 7 has an elongated shape with the locking portion 8 and the actuating portion 9 that have been placed on the opposite side of the axis of rotation R. The locking portion 8 comprises the point 22, the first inclined surface 23 to give a certain rotation of the locking member 7 when the coffee bean container 3 is being inserted, a supporting portion 25 that is leaning against the door 5 and presses the locker member 30 (not shown on this figure) and the locking surface 24 that is engaged with the locking surface 16 of the door 5. The locking member 7 has a limited angle of rotation arranged as mechanical stops such that the point 22 cannot cross the line along the movement path and defined as an extension of the actuating edge 15.

The actuating portion 9 which is in touching contact with the actuating rib 26 and keeps the locking portion 8 engaged with the door 5, also comprises a collision member 19 which comes in to collision with the actuating rib 26 with actuating edge 15 which are arranged on the coffee bean container 3. The second inclined surface 20 of the actuating portion 9 rotates the locking portion 8 toward the door 5, when they are in touching contact with a coffee bean container 3. The locking surface 16 and the locking surface 24 are complementary to one another and both inclined to provide easy disengagement of the locking member 7 from the door 5.

The present invention provides to a user a coffee machine with removable coffee bean container in which the operation of the removable coffee beans container is performed smoothly and in which the risk of malfunction is decreased. Provided also with automatically closed or opened the door moved by manual movement the coffee bean container. The solution provides also a positive user impression that the coffee beans container is firmly positioned in the housing.

Although the invention has been explained in relation to its preferred embodiment(s) as mentioned above, it is to be understood that many other possible modifications and variations can be made without departing from the scope of the present invention..

### List of reference signs

- 1: coffee machine
- 2: housing
- 3: coffee bean container
- 4: discharge opening
- 5: door
- 6: stop
- 7: locking member
- 8: locking portion
- 9: actuating portion
- 10: housing bottom
- 12: guiding rib
- 13: latching lug
- 14: grinder opening
- 15: actuating edge
- 16: locking surface
- 17: locker means
- 18: guiding protrusion
- 19: collision member
- 20: second inclined surface
- 21: housing opening
- 22: point
- 23: first inclined surface
- 24: locking surface
- 25: supporting surface
- 26: actuating rib
- 27: locating pin
- 28: opening
- 29: locker opening
- 30: locker member

- R: axis of rotation

## Claims

1. A coffee machine (1), having a housing (2) with a housing bottom (10) and a housing opening (21) and a coffee bean container (3) that is removable therefrom through the housing opening (21), along a movement path, having a grinder for coffee beans, having a discharge opening (4) of the coffee bean container (3) for supplying the beans to the grinder and having a door (5) for closing the discharge opening (4) which can be moved by manual movement of the coffee bean container (3) along the movement path between an opened position and a closed position, having a stop (6) on the housing (2), which stands substantially transversely to the movement path and, when the coffee bean container (3) is being inserted in to the housing (2) through the housing opening (21) along the movement path, the stop (6) is in a touching contact with the door (5), **characterized by** a locking member (7) comprising:
- a locking portion (8) which when the coffee bean container (3) is inserted in to the housing (2) engages the door (5) in a locking manner in the opened position of the door (5), and
- an actuating portion (9), which comes in a touching contact with the coffee bean container (3) which when the coffee bean container (3) is inserted in to the housing (2), keeps the locking portion (8) engaged with the door (5) in the opened position of it,
wherein the locking member (7) is pivotally connected to the housing bottom (10) and can be rotated about an axis of rotation (R), and the axis of rotation (R) is arranged between the locking portion (8) and the actuating portion (9), wherein the axis of rotation (R) is perpendicular to the housing bottom (10), therefore substantially horizontal rotation of the locking member (7) is provided.

2. The coffee machine according to claim 1, **characterized in that** the locking member (7) has an elongated shape, wherein the locking portion (8) and the actuating portion (9) have been placed on opposite sides of the axis of rotation (R),

3. The coffee machine according to any of the preceding claims, **characterized in that** the locking member (7) is connected with the housing (2) by a bayonet connection, and wherein the bayonet connection comprises a bayonet slot on the housing (2) and a bayonet pin on the locking member (7).

4. The coffee machine according to any of the preceding claims, **characterized in that** viewed from the housing opening (21) side a front part of the locking member (7) is the locking portion (8), and a rear portion of the locking member (7) is the actuating portion (9), when the coffee bean container (3) has been inserted.

5. The coffee machine according to any of the preceding claims, **characterized in that** the coffee bean container (3) comprises guiding ribs (12) arranged on an outer bottom portion of the container (3) along the movement path, on the both side of the discharge opening (4) and also comprises an actuating rib (26) having an actuating edge (15) which comes into collision with a collision member (19) of the actuating portion (9).

6. The coffee machine according to any of the preceding claims, **characterized in that** the locking portion (8) comprises a point (22), a first inclined surface (23) to give a certain rotation of the locking member (7), a supporting portion (25) and a locking surface (24), wherein the actuating portion (9) comprises a second inclined surface (20) to give opposite direction of rotation of the locking member (7), when the locking portion (8) and the actuating portion (9) are in touching contact with a coffee bean container (3).

7. The coffee machine according to claim 6, **characterized in that** the first inclined surface (23) turns the locking member (7) clockwise and the second inclined surface (20) turns it in the opposite direction.

8. The coffee machine according to claim 6 or 7, **characterized in that** the actuating portion (9) is rotated by touching contact with the actuating rib (26) against the second inclined surface (20).

9. The coffee machine according to any of the preceding claims, **characterized in that** the door (5) is provided with a locating pin (27) extending from said door (5) along the movement path, said locating pin (27) being sized to be positioned within an opening (28) that is arranged in the stop (6).

10. The coffee machine according to any of the preceding claims, **characterized in that** the coffee bean container (3) is provided with a pivotable latching lug (13) as a door (5) movement limiter, which stops the door (5) in one of the end position, the opened or the closed position of the door (5).

11. The coffee machine according to any of the preceding claims, **characterized in that** the coffee bean container (3) is provided with a locker means (17) for locking the door (5) in closed position, comprises a locker opening (29) arranged on the door (5), and a locker member (30) that protrudes through the locker opening (29), wherein the locker member (30) is arranged to be pressed by the locking portion (8) to release movement of the door (5).

## Patentansprüche

1. Kaffeemaschine (1), die ein Gehäuse (2) mit einem Gehäuseboden (10) und einer Gehäuseöffnung (21) und einen Kaffeebohnenbehälter (3) aufweist, der über die Gehäuseöffnung (21) einen Bewegungsweg entlang daraus herausgenommen werden kann und ein Mahlwerk für Kaffeebohnen, eine Abgabeöffnung (4) zum Zuführen der Bohnen zum Mahlwerk und eine Tür (5) zum Verschließen der Abgabeöffnung (4) aufweist, die durch manuelles Bewegen des Kaffeebohnenbehälters (3) entlang des Bewegungswegs zwischen einer offenen und einer geschlossenen Position bewegt werden kann, wobei sich ein Anschlag (6) an dem Gehäuse (2) befindet, der im Wesentlichen quer zum Bewegungsweg steht und, wenn der Kaffeebohnenbehälter (3) den Bewegungsweg entlang über die Gehäuseöffnung (21) in das Gehäuse (2) eingesetzt wird, die Tür (5) berührt, **gekennzeichnet durch** ein Verriegelungselement (7), das Folgendes umfasst:
- einen Verriegelungsabschnitt (8), der, wenn der Kaffeebohnenbehälter (3) in das Gehäuse (2) eingesetzt wird, die Tür (5) verriegelnd in ihrer offenen Position in Eingriff nimmt, und
- einen Betätigungsabschnitt (9), der, wenn der Kaffeebohnenbehälter (3) in das Gehäuse (2) eingesetzt wird, den Kaffeebohnenbehälter (3) berührt, den Verriegelungsabschnitt (8) in der offenen Position der Tür (5) in Eingriff damit hält,
wobei das Verriegelungselement (7) schwenkbar mit dem Gehäuseboden (10) verbunden ist und um eine Rotationsachse (R) gedreht werden kann und die Rotationsachse (R) zwischen dem Verriegelungsabschnitt (8) und dem Betätigungsabschnitt (9) angeordnet ist, wobei die Rotationsachse (R) senkrecht zum Gehäuseboden (10) verläuft, so dass für eine im Wesentlichen horizontale Rotation des Verriegelungselements (7) gesorgt ist.

2. Kaffeemaschine nach Anspruch 1, **dadurch gekennzeichnet, dass** das Verriegelungselement (7) eine längliche Form aufweist, wobei der Verriegelungsabschnitt (8) und der Betätigungsabschnitt (9) auf gegenüberliegenden Seiten der Rotationsachse (R) platziert worden sind.

3. Kaffeemaschine nach einem der vorhergehenden Ansprüche, **dadurch gekennzeichnet, dass** das Verriegelungselement (7) über eine Bajonettverbindung mit dem Gehäuse (2) verbunden ist, und wobei die Bajonettverbindung ein Bajonettrahmenteil an dem Gehäuse (2) und einen Bajonettstift an dem Verriegelungselement (7) umfasst.

4. Kaffeemaschine nach einem der vorhergehenden Ansprüche, **dadurch gekennzeichnet, dass** es sich bei Betrachtung von der Seite der Gehäuseöffnung (21) aus bei einem vorderen Teil des Verriegelungselements (7) um den Verriegelungsabschnitt (8) handelt und bei einem hinteren Abschnitt des Verriegelungselements (7) um den Betätigungsteil (9), wenn der Kaffeebohnenbehälter (3) eingesetzt wurde.

5. Kaffeemaschine nach einem der vorhergehenden Ansprüche, **dadurch gekennzeichnet, dass** der Kaffeebohnenbehälter (3) Führungsrippen (12), die den Bewegungsweg entlang zu beiden Seiten der Abgabeöffnung (4) an einem äußeren, unteren Abschnitt des Behälters (3) angeordnet sind, und auch eine Betätigungsrippe (26) mit einer Betätigungskante (15) umfasst, die an einem Anlageelement (19) des Betätigungsabschnitts (9) zur Anlage kommt.

6. Kaffeemaschine nach einem der vorhergehenden Ansprüche, **dadurch gekennzeichnet, dass** der Verriegelungsabschnitt (8) eine Spitze (22), eine erste geneigte Fläche (23), die das Verriegelungselement (7) in eine bestimmte Rotation versetzt, einen Stützabschnitt (25) und eine Verriegelungsfläche (24) umfasst, wobei der Betätigungsabschnitt (9) eine zweite geneigte Fläche (20) umfasst, die das Verriegelungselement (7) in eine entgegengesetzte Rotation versetzt, wenn der Verriegelungsabschnitt (8) und der Betätigungsabschnitt (9) einen Kaffeebohnenbehälter (3) berühren.

7. Kaffeemaschine nach Anspruch 6, **dadurch gekennzeichnet, dass** die erste geneigte Fläche (23) das Verriegelungselement (7) im Uhrzeigersinn und die zweite geneigte Fläche (20) das Verriegelungselement (7) in entgegengesetzter Richtung dreht.

8. Kaffeemaschine nach Anspruch 6 oder 7, **dadurch gekennzeichnet, dass** der Betätigungsabschnitt (9) dadurch gedreht wird, dass die Betätigungsrippe (26) die zweite geneigte Fläche (20) berührt.

9. Kaffeemaschine nach einem der vorhergehenden Ansprüche, **dadurch gekennzeichnet, dass** die Tür (5) mit einem Fixierstift (27) versehen ist, der sich den Bewegungsweg entlang von der Tür (5) aus erstreckt, wobei der Fixierstift (27) so bemessen ist, dass er sich in einer Öffnung (28) positionieren lässt, die in dem Anschlag (6) angeordnet ist.

10. Kaffeemaschine nach einem der vorhergehenden Ansprüche, **dadurch gekennzeichnet, dass** der Kaffeebohnenbehälter (3) mit einer schwenkbaren Rastnase (13) als Bewegungsbegrenzer für die Tür (5) versehen ist, die die Tür (5) in einer der Endpositionen, der offenen oder der geschlossenen Position der Tür (5), stoppt.

11. Kaffeemaschine nach einem der vorhergehenden Ansprüche, **dadurch gekennzeichnet, dass** der Kaffeebohnenbehälter (3) mit einem Riegelmittel (17) zum Verriegeln der Tür (5) in der geschlossenen Position, eine an der Tür (5) angeordnete Riegelöffnung (29) und ein Riegelelement (30) umfasst, das durch die Riegelöffnung (29) hindurch vorsteht, wobei das Riegelelement (30) so angeordnet ist, dass zum Freigeben einer Bewegung der Tür (5) der Verriegelungsabschnitt (8) darauf drückt.

## Revendications

1. Machine à café (1), comportant un logement (2) qui comprend un fond de logement (10) et une ouverture de logement (21) et un bac à grains de café (3) qui peut en être enlevé au travers de l'ouverture de logement (21), le long d'une voie de déplacement, comportant un broyeur pour grains de café, comportant une ouverture de décharge (4) du bac à grains de café (3) pour alimenter les grains de café sur le broyeur et comportant une porte (5) pour fermer l'ouverture de décharge (4), laquelle porte peut être déplacée, au moyen d'un déplacement manuel du bac à grains de café (3) le long de la voie de déplacement, entre une position ouverte et une position fermée, comportant un moyen d'arrêt (6) sur le logement (2), lequel moyen d'arrêt est positionné sensiblement transversalement à la voie de déplacement et, lorsque le bac à grains de café (3) est en cours d'insertion à l'intérieur du logement (2) au travers de l'ouverture de logement (21) le long de la voie de déplacement, le moyen d'arrêt (6) est en contact par effleurement avec la porte (5), **caractérisée par** un élément de verrouillage (7) comprenant :
- une section de verrouillage (8) qui, lorsque le bac à grains de café (3) est inséré à l'intérieur du logement (2), engage la porte (5) d'une manière par verrouillage dans la position ouverte de la porte (5) ; et
- une section d'actionnement (9) qui vient en contact selon un contact par effleurement avec le bac à grains de café (3), laquelle section d'actionnement, lorsque le bac à grains de café (3) est inséré à l'intérieur du logement (2), maintient la section de verrouillage (8) engagée avec la porte (5) dans la position ouverte de celle-ci,
dans laquelle l'élément de verrouillage (7) est connecté de façon pivotante au fond de logement (10) et peut être entraîné en rotation autour d'un axe de rotation (R), et l'axe de rotation (R) est agencé entre la section de verrouillage (8) et la section d'actionnement (9), et dans laquelle l'axe de rotation (R) est perpendiculaire au fond de logement (10) et par voie de conséquence, une rotation sensiblement horizontale de l'élément de verrouillage (7) est assurée.

2. Machine à café selon la revendication 1, **caractérisée en ce que** l'élément de verrouillage (7) présente une forme allongée, dans laquelle la section de verrouillage (8) et la section d'actionnement (9) ont été placées sur des côtés opposés de l'axe de rotation (R).

3. Machine à café selon l'une quelconque des revendications précédentes, **caractérisée en ce que** l'élément de verrouillage (7) est connecté avec le logement (2) au moyen d'une connexion à baïonnette, et dans laquelle la connexion à baïonnette comprend une fente à baïonnette sur le logement (2) et un ergot de baïonnette sur l'élément de verrouillage (7).

4. Machine à café selon l'une quelconque des revendications précédentes, **caractérisée en ce que**, tel que vu depuis le côté de l'ouverture de logement (21), une partie avant de l'élément de verrouillage (7) est la section de verrouillage (8) et une partie arrière de l'élément de verrouillage (7) est la section d'actionnement (9), lorsque le bac à grains de café (3) a été inséré.

5. Machine à café selon l'une quelconque des revendications précédentes, **caractérisée en ce que** le bac à grains de café (3) comprend des nervures de guidage (12) qui sont agencées sur une section de fond externe du bac à grains de café (3) le long de la voie de déplacement, sur les deux côtés de l'ouverture de décharge (4), et comprend également une nervure d'actionnement (26) qui comporte un bord d'actionnement (15) qui entre en collision avec un élément de collision (19) de la section d'actionnement (9).

6. Machine à café selon l'une quelconque des revendications précédentes, **caractérisée en ce que** la section de verrouillage (8) comprend un point (22), une première surface inclinée (23) pour assurer une certaine rotation à l'élément de verrouillage (7), une section de support (25) et une surface de verrouillage (24), dans laquelle la section d'actionnement (9) comprend une deuxième surface inclinée (20) pour assurer à l'élément de verrouillage (7) une direction de rotation opposée, lorsque la section de verrouillage (8) et la section d'actionnement (9) sont en contact par effleurement avec un bac à grains de café (3).

7. Machine à café selon la revendication 6, **caractérisée en ce que** la première surface inclinée (23) fait tourner l'élément de verrouillage (7) dans le sens des aiguilles d'une montre et la deuxième surface inclinée (20) le fait tourner dans le sens opposé.

8. Machine à café selon la revendication 6 ou 7, **caractérisée en ce que** la section d'actionnement (9) est entraînée en rotation au moyen du contact par effleurement avec la nervure d'actionnement (26) contre la deuxième surface inclinée (20).

9. Machine à café selon l'une quelconque des revendications précédentes, **caractérisée en ce que** la porte (5) est munie d'une broche de localisation (27) qui est étendue depuis ladite porte (5) le long de la voie de déplacement, ladite broche de localisation (27) étant dimensionnée de telle sorte qu'elle soit positionnée à l'intérieur d'une ouverture (28) qui est agencée dans le moyen d'arrêt (6).

10. Machine à café selon l'une quelconque des revendications précédentes, **caractérisée en ce que** le bac à grains de café (3) est muni d'une patte d'enclenchement pouvant pivoter (13) en tant que moyen de limitation de déplacement de la porte (5), laquelle patte d'enclenchement arrête la porte (5) dans une position parmi la position de fin de course, la position ouverte et la position fermée de la porte (5).

11. Machine à café selon l'une quelconque des revendications précédentes, **caractérisée en ce que** le bac à grains de café (3) est muni d'un moyen de verrou (17) pour verrouiller la porte (5) dans la position fermée, il comprend une ouverture de verrou (29) qui est agencée sur la porte (5) et un élément de verrou (30) qui fait saillie au travers de l'ouverture de verrou (29), dans laquelle l'élément de verrou (30) est agencé pour être soumis à une pression exercée par la section de verrouillage (8) afin de libérer le déplacement de la porte (5).
